(19) **Europäisches Patentamt / European Patent Office / Office européen des brevets**

(11) **EP 3 519 289 B1**

(12) **EUROPEAN PATENT SPECIFICATION**

(45) Date of publication and mention
of the grant of the patent:
**08.10.2025 Bulletin 2025/41**

(21) Application number: **17794310.7**

(22) Date of filing: **02.11.2017**

(51) International Patent Classification (IPC):
**B63B 1/32** *(2006.01)* **B63B 1/40** *(2006.01)*
**B63B 1/08** *(2006.01)*

(52) Cooperative Patent Classification (CPC):
**B63B 1/40; B63B 1/08; B63B 1/32;**
B63B 2001/325; Y02T 70/10

(86) International application number:
**PCT/EP2017/078049**

(87) International publication number:
**WO 2018/083175 (11.05.2018 Gazette 2018/19)**

(54) **A DEVICE FOR REDUCING THE RESISTANCE OF WATER SURFACE VESSELS**

VORRICHTUNG ZUR VERRINGERUNG DES WIDERSTANDES VON
WASSERFLÄCHENFAHRZEUGEN

DISPOSITIF POUR RÉDUIRE LA RÉSISTANCE DE NAVIRES DE SURFACE D'EAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2016 SE 1651445**

(43) Date of publication of application:
**07.08.2019 Bulletin 2019/32**

(73) Proprietor: **Kongsberg Maritime Sweden AB**
**681 29 Kristinehamn (SE)**

(72) Inventors:
• **ESLAMDOOST, Arash**
**421 37 Västra Frölunda (SE)**

• **LARSSON, Lars**
**429 41 Särö (SE)**
• **BROWN, Matz**
**45933 LJUNGKILE (SE)**

(74) Representative: **Bjerkén Hynell KB**
**P.O. Box 1061**
**101 39 Stockholm (SE)**

(56) References cited:
WO-A1-96/20105     DE-A1- 3 236 188
DE-A1- 3 936 280     DE-A1- 4 412 853
JP-A- H11 180 379

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The invention relates to a water surface vessel and a use of a water surface vessel.

BACKGROUND

For a water surface vessel powered by a propulsion arrangement, e.g. including one or more internal combustion engines, electric motors, etc., there is a desire to decrease the hull resistance of the vessel, to thereby reduce the power energy consumption of the power arrangement.

DE3936280A1 discloses a ship, wherein a guide surface, with a profile cross-section, is immersed in a stern wave when the ship moves. It is suggested that energy in the stern wave is thereby used to improve the ship's propulsion.

SUMMARY

An object of the invention is to decrease the hull resistance of a water surface vessel.

This object is reached with a water surface vessel according to claim 1.

The vessel may be of any type, e.g. a passenger ship, a cargo transport ship, a military boat, a pleasure craft, a barge or a towed hull.

The recirculating zone may include a part, usually an upper part, where the water moves towards the transom, and another part, usually a lower part, where the water moves away from the transom. It is understood that the pushing surface is arranged to be, when the vessel is travelling in the recirculation zone speed interval, at least partly submerged into at least the part of the recirculating zone in which the water is moving towards the transom.

The vessel may be arranged so that at least a portion of the transom is in contact with the water when the vessel is stationary. Where the transom meets a hull bottom surface, a transom edge may be formed. In the recirculating zone speed interval the portion of the transom which is in contact with the water may be reduced or eliminated. In the recirculating zone speed interval, the Froude number is in a range with a low end at 0.3, and a high end at 0.6. The vessel presents a mass, a hull shape, hull dimensions, and a propulsion arrangement so as to provide the arrangement of the vessel to travel in the recirculating zone speed interval in which water is moving towards the transom in the recirculating zone behind the transom.

The transom may be presented by a hull of the vessel. The pushing surface is separate from the transom. The pushing device is separate from hull. A suitable mounting arrangement for mounting the pushing device to the hull may be provided as exemplified below. In embodiments of the invention, at least a portion of the pushing surface faces at least partly backwards in relation to the intended direction of straight travel. Thereby, the pushing surface faces generally backwards, i.e. away from the transom.

Thanks to the pushing device, the forward moving water in the recirculation zone will act on the pushing surface so as to provide a forwardly directed force transferred from the pushing device to the rest of the vessel. Thereby, the total hull resistance of the vessel will decrease. As discussed further below, surprisingly, significant reductions of the hull resistance may be obtained.

The pushing surface is located behind the transom. According to the invention the pushing surface presents a curvature with at least one center of curvature located on a side of the pushing surface which is opposite to the transom. It is understood that where the curvature changes continuously along a portion of the pushing surface, there are an infinite amount of centres of curvature. The pushing surface is concave. As mentioned, at least a portion of the pushing surface faces at least partly backwards in relation to the intended direction of straight travel of the vessel, and it is therefore understood that a concavely shaped pushing surface would face at least partly backwards. The pushing surface is curved in a horizontal plane intersecting the pushing device. The pushing surface may be scoop shaped. The pushing surface may present a double curvature. Thus, the pushing surface may curve in two directions. As discussed below, a curved, concave or scoop shaped pushing surface may provide a particularly high reduction of the vessel hull resistance. In brief, the capacity of such pushing surfaces to deflect water backwards, increases the pushing force exerted by the pushing device onto the rest of the vessel. Another way of putting it is that such pushing devices may provide the largest possible resistance to the forward flowing water in the recirculating zone.

Advantageously, the pushing surface may be curved in a plane intersecting the pushing device, which plane is vertical and parallel to the intended direction of straight travel of the vessel. At least a lower portion of the pushing device may present a deflection surface which faces partly downwards and partly forwards in relation to the intended direction of straight travel of the vessel. The pushing device may be J-shaped in a plane intersecting the pushing device, which plane is vertical and parallel to the intended direction of straight travel of the vessel. Where the pushing surface is concave, it follows that the lower end of the "J" will point rearwards. Thereby, as also explained below, the pushing device interferes with the water freestream, e.g. due to the vessel heeling, without creating a substantial increase in the hull resistance.

In advantageous embodiments, the pushing device presents a forward facing surface which faces at least partly forwards in relation to the intended direction of straight travel of the vessel, which forward facing surface is convex in a plane which is vertical and parallel to the intended direction of straight travel of the vessel. The pushing device may divide the recirculating zone into a forward part and a rearward part. The water circulating in the forward part of the recirculating zone may flow along the convex forward facing surface, and thereby a locally reduced pressure may be created, contributing to a forwardly directed force transferred from the pushing device to the rest of the vessel.

In some embodiments, the pushing surface is planar. Thereby, the pushing device may be easy to manufacture, while still providing a substantial decrease of the vessel hull resistance. The pushing surface is preferably continuous, e.g. smooth, regardless of whether it is planar, concave or of any other suitable shape. Since the pushing surface is continuous the pushing surface may present an uninterrupted shape. The pushing surface being continuous may provide for the pushing surface being void of any sudden changes in its curvature. The pushing device may, or may not, be made from one piece. However, it should be noted that in some alternatives, the pushing surface may be discontinuous. For example, the pushing surface may be formed by two or more surfaces which are flat, or which present a single curvature, and which form a small radius where they are joined to each other. In some embodiments, the pushing device may present a central portion which is at least partially surrounded by a rim. Thereby, the pushing device may form a pushing surface which is discontinuous where the rim is joined to the central portion.

Advantageously, the pushing surface presents a width, i.e. an extension in a direction which is horizontal and transversal to the intended direction of straight travel, which is at least 50% of the width of the transom at a waterline of the vessel. The pushing surface is located at a distance from the transom, which distance is at least 10%, preferably at least 20% of the width of the transom at the waterline of the vessel. The optimal distance of the pushing surface from the transom may depend on the speed of the vessel. Thereby, it may be ensured that the pushing surface covers a major portion of the recirculation zone, or an area of recirculating zone with largest forward flow.

It should be noted that in some embodiments, the pushing surface, where the entire pushing surface is arranged to be into the recirculating zone, or the part of the pushing surface that is arranged to be submerged into the recirculating zone, is divided into at least two separated portions. The at least two portions of the pushing surface, or the at least two portions of the pushing surface part, may be distributed along a horizontal and transverse direction of the vessel. The at least two portions of the pushing surface, or the at least two portions of the pushing surface part, may be provided at a distance from each other. In such embodiments, the pushing device may present portions, each of which present a respective of the portions of the pushing surface, or the portions of the pushing surface part. Between two of the at least two pushing device portions there may be a respective opening. Such an opening may allow for the discharged jet of a water jet propulsion unit to pass the pushing device without interfering with the pushing device. In some embodiments, the pushing device may present two or more separate parts, each presenting a respective of the portions of the pushing surface, or the portions of the pushing surface part that is arranged to be submerged into the recirculating zone. In further embodiments, the pushing device parts, each of which present a respective of the portions of the pushing surface, or the portions of the pushing surface part that is arranged to be submerged into the recirculating zone, may be connected, preferably above a water to air boundary of the recirculating zone.

According to the invention, the pushing device is arranged to be outside of the water freestream at forward, straight travel of the vessel, on flat water. The pushing device is arranged to be outside of the water freestream at forward, straight travel of the vessel, on flat water, when the vessel is not heeling to port or to starboard. Heeling may be caused by the vessel carrying a load with a center of gravity towards a port or a starboard side of the vessel. Heeling may also be caused by the vessel turning. Flat water means water without any waves. Waves, e.g. coming from the side of the vessel, may cause the vessel to heel. Also, wind may cause the vessel to heel. Nevertheless, the pushing device is arranged to be outside of the water freestream when the vessel is not heeling, such as at forward, straight travel of the vessel, on flat water, and with no wind.

Also, in a horizontal, lateral direction, the extension of the pushing device is such that it does not interfere with the water freestream passing the sides of the boat, at least not at forward, straight travel of the vessel, on flat water, with no wind. For example, the width of the pushing device may be smaller than the width of the transom. At least, the width of the pushing device at a waterline of the vessel may be smaller than the width of the transom at the waterline of the vessel.

The pushing device is arranged to be outside of the water freestream at forward, straight travel of the vessel, on flat water, with no wind, and when the vessel trim is within a range intended by a designer of the vessel. The trim of the vessel is the angle of the vessel around a lateral, horizontal axis. Loading of the vessel may affect the trim of the vessel. For example, if the vessel is heavily loaded at the stern, the vessel may have a trim with the bow being higher in relation to the stern, than intended by the vessel designer. A vessel trim, within a range intended by a designer of the vessel, may be provided when driving the vessel at a loading of the vessel, the loading being such that the actual waterline, at vessel standstill, is parallel to the design waterline. Thus, preferably, the pushing device is arranged to be outside of the water freestream at forward, straight travel of the vessel, on flat water, with no wind, when driving the vessel at a loading of the vessel, the loading being such that the actual waterline, at vessel standstill, is parallel to the design waterline.

Other factors may affect the vessel trim, such as the angle of one or more trim adjustment devices of the vessel. Many vessels allow for a vessel operator to adjust the vessel trim, by means of one or more trim adjustment devices. A trim adjustment device may be a propeller, the angle of which may be adjusted within a vertical plane parallel with to a longitudinal direction of the vessel. A trim adjustment device may also be a trim tab. However, preferably, the range of the vessel trim allowed by such trim adjustment device(s), should be within the range intended by a designer of the vessel. I.e., preferably, the pushing device is arranged to be outside of the water freestream at forward, straight travel of the vessel, on flat water, with no wind, and when the vessel trim is at a maximum, bow-up, position allowed by one or more trim adjustment devices of the vessel.

The water freestream is formed by any portion of the water surrounding the vessel, having substantially the same speed in relation to the vessel as water further away from the vessel. Forward travel of the vessel means a travel in a direction, parallel to the vessel longitudinal direction, from the stern to the bow of the vessel. During forward travel, the transom moves in front of the pushing surface of the pushing device.

As stated, where the transom meets a hull bottom surface, a transom edge may be formed. Preferably, the pushing device is arranged to be above a flow stream surface, originating at the transom edge, at forward, straight travel of the vessel, on flat water, with no wind, when the vessel is not heeling to port or to starboard. The stream surface could be said to be made up of streamlines, each originating at different points on the transom edge. A streamline originating at the transom edge may mean that the streamline intersects the transom edge, or extends in a close vicinity of the transom edge. As is known, a streamline is a curve that is instantaneously tangent to the velocity vector of the flow. The stream surface originating at the transom edge may extend between the recirculating zone and the water freestream. Where the transom edge is V-shaped or U-shaped, the stream surface originating from the transom edge may present a V-shaped or U-shaped cross-section. In such a case, although at least a portion of the pushing device may be at a lower level than a portion of said stream surface, which stream surface portion is laterally and horizontally outside of the pushing device, the pushing device is nevertheless herein considered to be above the stream surface if the intersection of the pushing device and any vertical line is above the intersection of the said stream surface and the same vertical line.

Preferably, the pushing device is arranged to be above a stream surface, originating at the transom edge, at forward, straight travel of the vessel, on flat water, with no wind, and when the vessel trim is within a range intended by a designer of the vessel.

Preferably, the pushing device is arranged to present a lower contour, wherein at least a portion of the lower contour follows the shape of freestream water under recirculating zone. For example, the lower contour may follow the shape of the freestream at portions of the pushing device, which portions are distributed horizontally on opposite lateral sides of a longitudinal centerline of the vessel. Thereby, the lower contour may deviate from the shape of freestream water, between said laterally distributed contour portions. For example, the lower contour may be, close to the vessel longitudinal centerline, further away from the freestream water than at lateral distances from the longitudinal centerline. However, it should be noted that some embodiments, the pushing device lower contour does not at any part thereof follow the shape of freestream water under recirculating zone.

Preferably, the pushing device is arranged to present a lower contour which follows the shape of freestream water under recirculating zone. The pushing device as projected perpendicularly to the intended direction of straight travel of the vessel may present a lower contour which substantially matches a lower contour of the transom as projected perpendicularly to the intended direction of straight travel of the vessel. The pushing surface lower contour may be in the vicinity of and/or coincide with the pushing device lower contour. A middle section of a lower delimitation of the pushing device may be lower than two opposite transverse end sections of the lower delimitation of the pushing device. Thereby, it may be ensured that the pushing surface covers a major portion of the recirculation zone. In addition, the risk of interference of the pushing device, at the lateral end sections thereof, with the water freestream may be decreased.

The vessel may comprise an additional pushing device located behind said pushing device. The additional pushing device may have the same shape or a different shape. Each of the pushing devices may be according to any embodiment or example presented herein or falling within the scope of the claims.

The object is also reached with a use of a water surface vessel according to any embodiment described of claimed herein, wherein a propulsion arrangement of the vessel is controlled so as for the vessel to travel in the recirculating zone speed interval so that water is moving towards the transom in a recirculating zone behind the transom, and allowing the pushing surface to be at least partly submerged into the recirculating zone.

DESCRIPTION OF THE DRAWINGS

Below embodiments of the invention will be described with reference to the drawings in which:

- fig. 1 is a side view of a marine surface vessel according to an embodiment of the invention,
- fig. 2 is a vertical cross-sectional view showing a rear portion of a vessel according to prior art, the cross-section coinciding with a longitudinal centre line in the vessel,

- fig. 3 is a perspective view of the vessel portion shown in fig. 2,
- fig. 4 is a perspective view of a rear portion of the vessel in fig. 1,
- fig. 5 is a perspective view of a pushing device of the vessel in fig. 1,
- fig. 6 is a vertical cross-sectional view showing a rear portion of a vessel in fig. 1, the cross-section coinciding with a longitudinal centre line in the vessel,
- fig. 7 is a view from above of a horizontal cross-section of water around a rear portion of the vessel in fig. 1, indicating a flow pattern in the water,
- fig. 8 shows a detail in fig. 7, more specifically a lateral end of a pushing device,
- fig. 9 shows a schematic top view of a pushing device according to an embodiment of the invention,
- fig. 10 is a perspective view of a rear portion of a vessel according to an alternative embodiment of the invention,
- fig. 11 is a vertical cross-sectional view showing a rear portion of the vessel in fig. 10, the cross-section coinciding with a longitudinal centre line in the vessel,
- fig. 12 is a perspective view of a pushing device according to a further alternative embodiment of the invention,
- fig. 13 and fig. 14 are side views of vessels according to further embodiments of the invention, and
- fig. 15 is a perspective view of a rear portion of the vessel in yet another embodiment of the invention.

DETAILED DESCRIPTION OF EMBODIMENTS

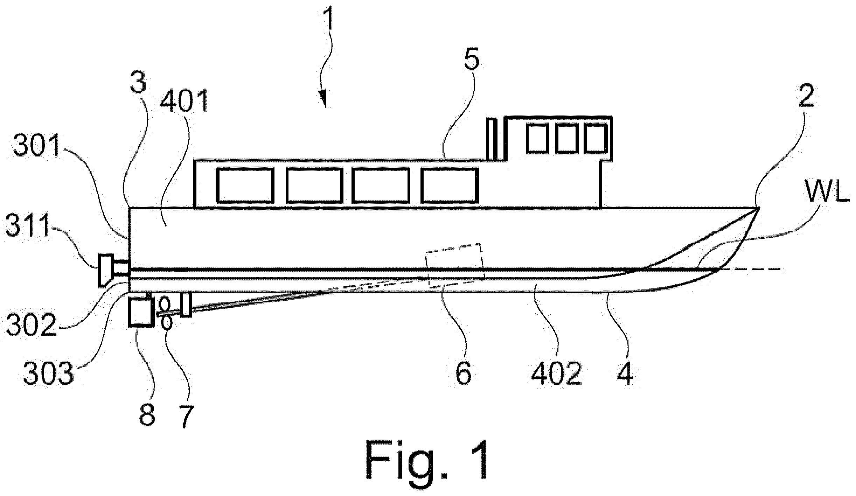

Fig. 1 shows a marine surface vessel in the form of a passenger boat. The invention is of course applicably to a variety of alternative water surface vessel types, e.g. passenger ships, cargo transport ships, military boats, pleasure craft, barges or towed hulls.

The vessel 1 extends in a longitudinal direction between a bow 2 and a stern 3 of the vessel 1. The longitudinal direction is herein understood as being parallel to an intended direction of straight travel of the vessel. The vessel presents a hull 4 and a superstructure 5 above the hull 4.

The hull 4 presents two lateral side surfaces 401 located on opposite sides of a longitudinal centre line of the vessel, and extending substantially in the vessel longitudinal direction. The hull 4 presents a bottom surface 402 with a substantially V-shaped cross-section as seen perpendicularly to the longitudinal direction. It should be noted that the bottom surface 402 may have lateral steps as is known per se on power boat hulls. The hull may in addition or alternatively have longitudinal steps between the bow and the stern, as is also known per se.

The vessel 1 has a propulsion arrangement comprising a power providing apparatus in the form of an internal combustion piston engine 6 connected to a propulsion unit 7 in the form of a propeller for propulsion of the vessel 1. A rudder 8 is provided for directional control of the vessel.

Alternatives are of course possible for the propulsion arrangement. For example, the engine may be e.g. a turbine. The power providing apparatus may be provided as some alternative to an engine, e.g. an electric motor. Further the number of power providing apparatuses 6 may be more than one, e.g. two or three. Also the number of propulsion units 7 may be more than one, e.g. two or three, e.g. each connected to a respective power providing apparatus. As an alternative to one or more propellers, the vessel may be provided with one or more water jet arrangements.

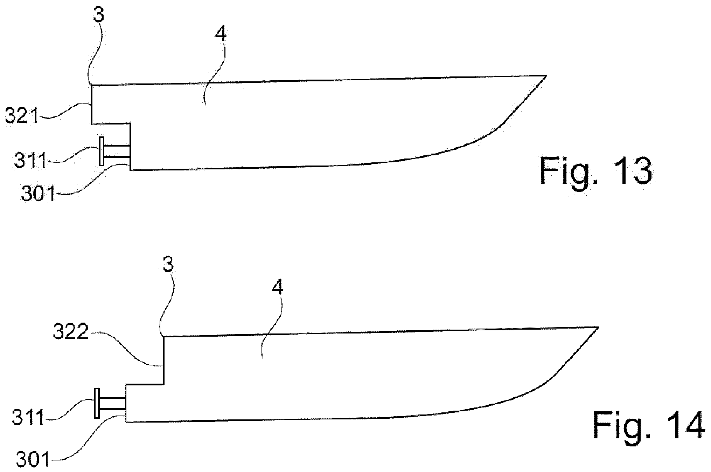

The vessel presents at the stern 3 a transom 301. The transom is in this example planar, but it may alternatively have any other suitable shape. For example, the transom 301 may present a single or double curvature; the transom could be concave or convex. Further transom examples are described below with reference to fig. 13 and fig. 14.

The vessel 1 is designed to present a waterline WL. The waterline WL indicates the surface of water when the vessel 1 is stationary. As can be seen in fig. 1, the vessel is arranged so that a portion 302 of the transom 301 is in contact with the water when the vessel is stationary.

Where the transom 301 meets the hull bottom surface 402 a transom edge 303 is formed. The edge 303 is preferably relatively sharp. For example, the transom edge 303 may present a radius which is less than 1% of the square root of the surface area of the transom 301.

It should be noted that one or more vessel trim adjustment devices, e.g. trim tabs, may be provided at the transom as is known per se.

The vessel also comprises a pushing device 311 described closer below.

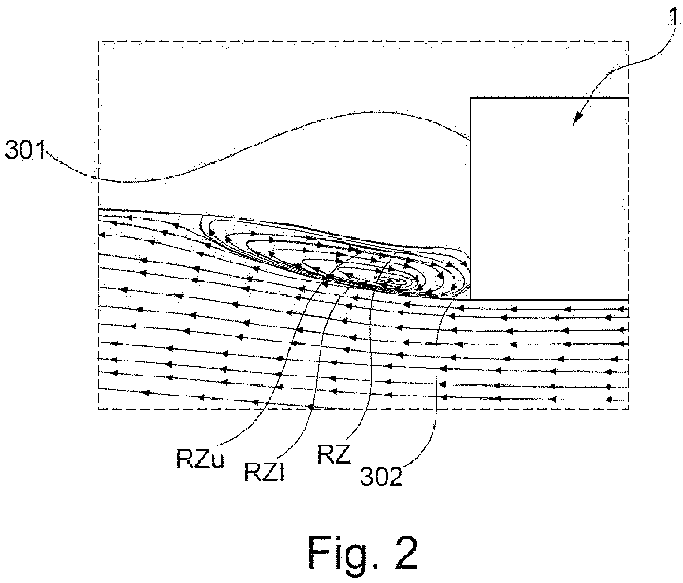

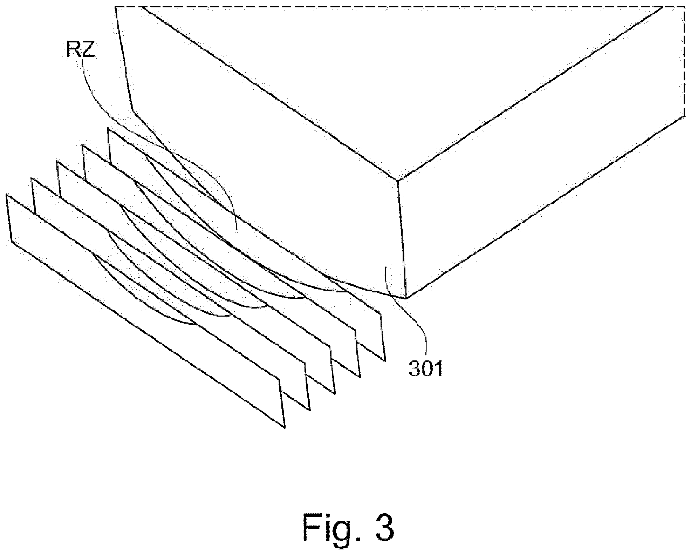

Reference is made fig. 2 and fig. 3, showing a longitudinal cross-section of the rear part of a vessel 1 without a pushing device 311 as mentioned above and described below. The vessel 1 is arranged to travel in what is herein referred to as a recirculating zone speed interval. A lower end of the recirculation zone speed interval may be immediately above zero speed. However, the speed may not be high enough for a pure planing of the boat.

As illustrated in fig. 2, in the recirculation speed interval, the portion 302 of the transom 301 which is in contact with the water may be reduced. However, at least at low speeds such a reduction of the wet transom portion may be non-existent or negligible. The recirculation speed interval may include a speed at a critical Froude number, i.e. a speed at which there is a transfer from a wet transom to a transom with no contact with the water. In the recirculation speed interval water is moving towards the transom in a recirculating zone RZ behind the transom 301. More specifically, the recirculating zone RZ includes a circulating flow of water. Thereby, the recirculating zone includes an upper part RZu where the water moves towards the transom, and a lower part RZl where the water moves away from the transom. Within the upper part of the recirculation zone RZu, any volume of water has a speed component in the longitudinal direction of the vessel, which is higher than the speed of the vessel. As understood from fig. 3, the width and depth of the recirculation zone is gradually reduced as the distance from the transom 301 increases. It is understood that the shape of the recirculating zone depends on the vessel's mass, hull shape, hull dimensions, and propulsion arrangement. The recirculating zone RZ may be adjacent to the transom 301, as suggested in fig. 2, or it may be at a distance from the transom.

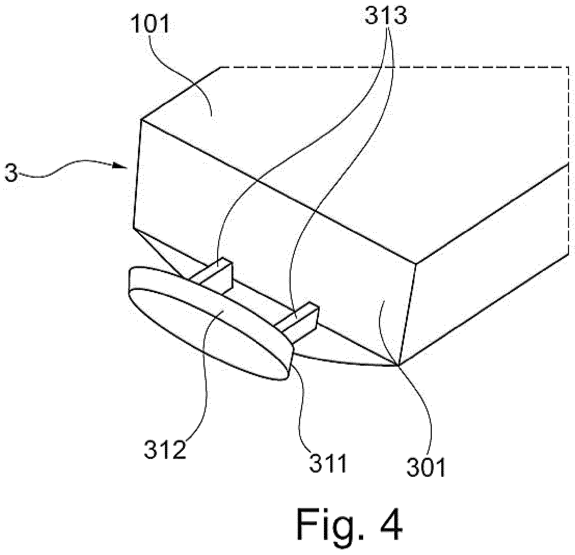

Reference is made to fig. 4, showing the rear part of the vessel in fig. 1. The pushing device 311 presents a pushing surface 312. The pushing surface 312 faces generally backwards in relation to the intended direction of straight travel. I.e. at least a major portion of the pushing surface 312 can be regarded as consisting of surface components of infinitesimal sizes which are at least partly facing backwards in relation to the intended direction of straight travel of the vessel. I.e. the normal of each surface components of at least a major portion of the pushing surface 312 has a component in the rearwards direction of the vessel.

The pushing device is mounted to the rest of the vessel by means of a mounting arrangement, in this example comprising two beams 313 protruding from the transom 301. However, alternative mounting arrangements are possible. For example, the mounting arrangement may extend from a deck 101 at the stern 3 of the vessel to the pushing device 311. The pushing device 311 is separate from the transom 301 and located behind the transom. Thus, the entire pushing surface 312 is located behind the transom 301. Although in this embodiment, the transom 301 and the pushing device 311 are located at the rear end of the vessel in relation to the intended direction of straight travel, it is understood that where the vessel is arranged to travel in two directions, such as certain barges and vehicle ferries, a transom 301 and a pushing device may be provided at both longitudinal ends of the vessel. Thereby, the pushing devices may be movable in relation to the vessel hull, so that a pushing device located in front of the hull in the direction of travel of the vessel may be lifted out of the water.

The pushing surface 312 is continuous and presents a width which is at least 50% of the width of the transom 301 at the waterline WL of the vessel. The pushing surface 312 is located at a distance from the transom, which distance is at least 10%, more preferably at least 20% of the width of the transom 301 at the waterline WL of the vessel.

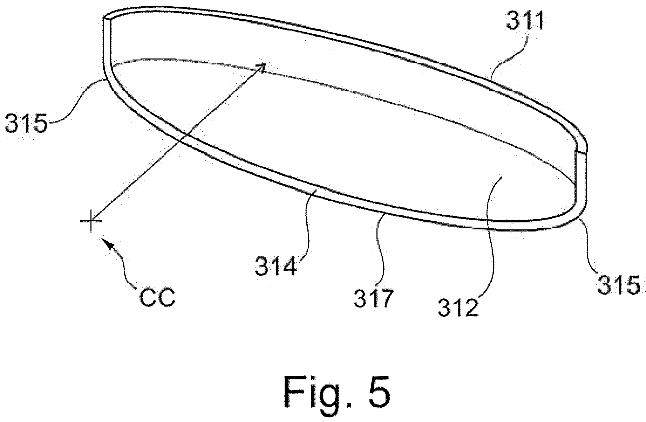

Reference is made to fig. 5 showing the pushing device 311. The pushing surface 312 is concave. An upper portion of the pushing surface 312 is curved in a horizontal plane intersecting the pushing device 311. The curvature changes continuously in the lateral direction of the vessel. Thereby, the pushing surface 312 presents a curvature with one center of curvature CC (in the case of a constant curvature), or a plurality or an infinite amount of centers of curvature CC, located on a side of the pushing surface 312 which is opposite to the transom 301. Such a centre of curvature CC is depicted in fig. 5. The pushing surface 312 is further scoop shaped. Thereby a lower portion of the pushing surface presents a double curvature. The pushing device 311 presents in this embodiment a substantially constant thickness.

The pushing device 311 is arranged to present a lower contour which follows the shape of freestream water under recirculating zone RZ. The shape of the freestream under the recirculation zone is given by the shape of the transom edge 303, which corresponds to the V-shape of the hull bottom surface 402. Therefore, a middle section 314 of a lower contour or delimitation 317 of the pushing device 311 is lower than two opposite transverse end sections 315 of the lower delimitation 317 of the pushing device 311.

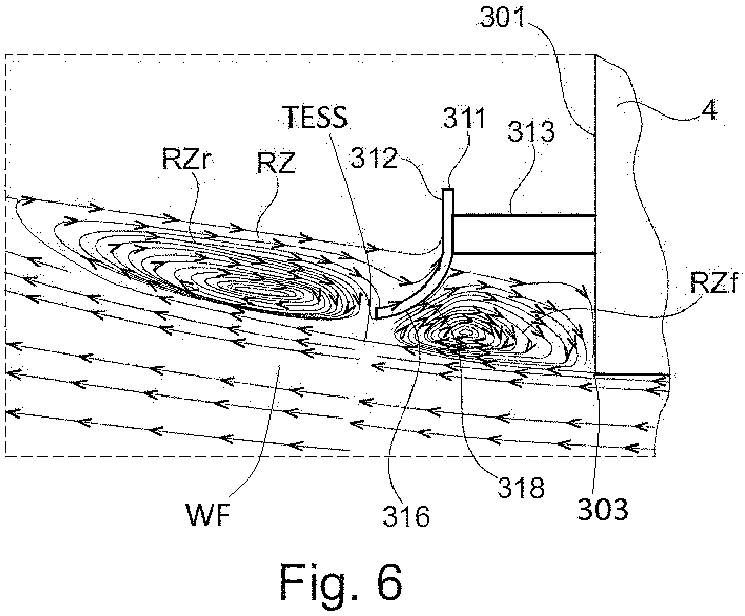

It should be noted that the transom edge 303 may have any other suitable shape, such as partially or fully rounded, or partially horizontally straight. Nevertheless, the pushing device 311 is preferably arranged to present a lower contour which follows the shape of freestream water under recirculating zone RZ, which in turn is dependent of the transom edge shape. Reference is made also to fig. 6 showing a vertical cross-section of the pushing device 311 in a plane intersecting the pushing device, which plane is vertical and parallel to the intended direction of straight travel of the vessel. As can be seen, the lower portion of the pushing surface 312 is due to said scoop shape curved in this cross-sectional plane. More specifically, the pushing device 311 is J-shaped in the cross-section of fig. 6, and the lower end of the "J" is pointing rearwards. Thereby, the lower portion of the pushing device 311 presents a deflection surface 316 which faces partly downwards and partly forwards in relation to the intended direction of straight travel of the vessel. Thereby, the pushing device 312 may interfere with the freestream water below the recirculation zone RZ, e.g. if the vessel 1 heels due to engagement of waves coming in from the side, without creating a substantial increase in the resistance.

It should be noted however, that many alternatives are possible for the pushing device shape.

The pushing device is arranged to be outside of the water freestream WF at forward, straight travel of the vessel, on flat water, with no wind, and when the vessel trim is within a range intended by a designer of the vessel. As discussed above, a vessel trim, within a range intended by a designer of the vessel, may be provided when driving the vessel at a loading of the vessel, the loading being such that the actual waterline WL (fig. 1), at vessel standstill, is parallel to the design waterline. Also, where the vessel is provided with one or more trim adjustment devices, preferably, the pushing device is arranged to be outside of the water freestream at forward, straight travel of the vessel, on flat water, with no wind, and when the vessel trim is at a maximum, bow-up, position allowed by the one or more trim adjustment devices.

Further, preferably, the pushing device is arranged to be above a stream surface TESS, originating at the transom edge 303, at forward, straight travel of the vessel, on flat water, with no wind, when the vessel is not heeling to port or to starboard, and when the vessel trim is within a range intended by a designer of the vessel.

As understood from fig. 6, the pushing surface 312 is arranged to be partly submerged into the recirculating zone RZ when the vessel is travelling in the recirculation zone speed interval. As suggested in fig. 6, pushing device 311 may divide the recirculating zone RZ into a forward part RZf and a rearward part RZr. Each of these parts RZf, RZr includes a circulating flow of water. As exemplified below, the forward moving water in the recirculation zone RZ, more specifically the forward moving water in the rearward part RZr of the recirculating zone, will act on the pushing surface 312 so as to provide a forwardly directed force transferred from the pushing device 311 to the rest of the vessel. Thereby, the total resistance of the vessel will decrease. As explained below, the curvature, the concave shape and/or the scoop shape of the pushing surface 312 described above is particularly well adapted to decreasing the vessel hull resistance. Calculations and tests suggest a resistance reduction of up to 13% or even more.

Contributing to the resistance reduction is a forward facing surface 318 of the pushing device. In said vertical plane the forward facing surface 318 is convex. In this embodiment, the forward facing surface 318 coincides with the deflection surface 316. Thus, the forward facing surface 318 faces partly downwards and partly forwards in relation to the intended direction of straight travel of the vessel. The water circulating in the forward part RZf of the recirculating zone RZ will flow along the convex forward facing surface, and thereby a locally reduced pressure will be created, contributing to the forwardly directed force transferred from the pushing device 311 to the rest of the vessel.

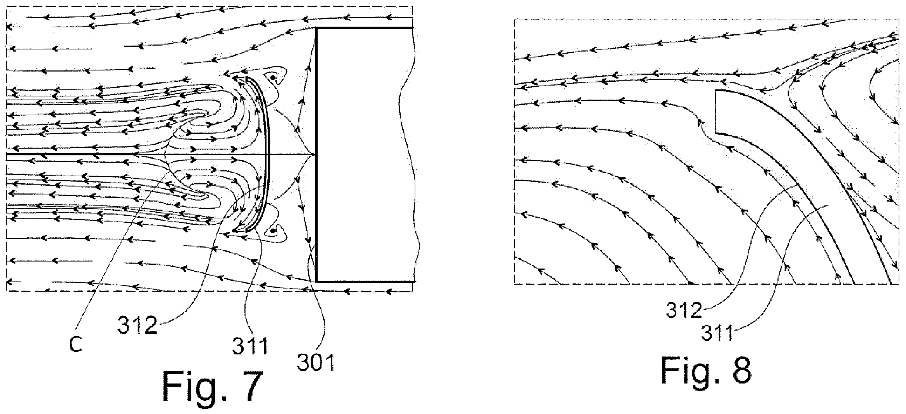

Reference is made to fig. 7, fig. 8 and fig. 9. As can be seen in fig. 7 and fig. 8, the flow of the recirculation zone is diverted at the pushing surface 312 and follows the pushing surface outwards and partly backwards at the transverse ends of the pushing surface 312. Fig. 7 depicts a C-shaped border behind the pushing device 311, between water moving forwards and backwards in relation to the vessel. The stream surface TESS described with reference to fig. 6 may coincide with this C-shaped border.

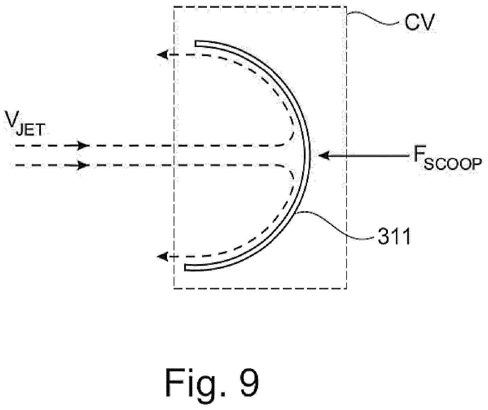

As understood from fig. 9, when the flow in the recirculation zone hits the pushing device 311, the force exerted on the pushing device may be obtained by a momentum flux balance over a control volume CV which surrounds the pushing device. Assuming the pressure to be constant on the boundaries of the control volume, the force would be equal to the change of momentum flux through the control volume. The flow in the recirculation zone may be regarded as a jet, and in a simple form, the momentum flux of a jet can be obtained as follows:

$$\text{Momentum Flux} = \rho QV$$

where $\rho$ is the fluid density, Q is the volumetric flow rate and V is the speed of the jet. The pushing device 311 may for simplicity be regarded as the scoop shaped object 311 in fig. 9. The force exerted on this object 311 can be obtained by the momentum flux balance through the control volume which surrounds the object: Force = Momentum flux change = Momentum Flux Out - Momentum Flux In = $\rho$Qjet (Vout - (-Vin)). Thus: Fscoop = $\rho$Qjet (Vjet - (-Vjet)) = 2$\rho$QjetVjet

For a flat object 311, the corresponding calculation becomes Fflat = $\rho$Qjet (0 - (-Vjet)) = $\rho$QjetVjet, since the flow is not diverted backwards by a flat object. Therefore the force exerted on a scoop form may be twice the force on the flat plate; i.e. Fscoop = 2Fflat. In fig. 7 and fig. 8, the flow is not deflected backwards 180 degrees, as in fig. 9, but nevertheless, the partial backwards deflection will increase the force exerted on the pushing device 311. According to calculations done by the inventors, the vessel hull resistance is lower with the scoop shaped pushing device 311 in fig. 7 compared to the resistance with a flat pushing device.

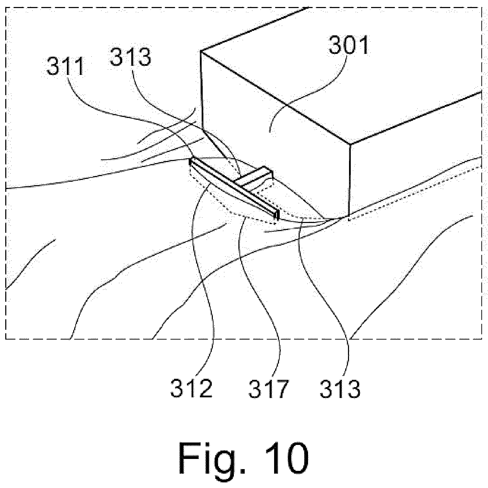

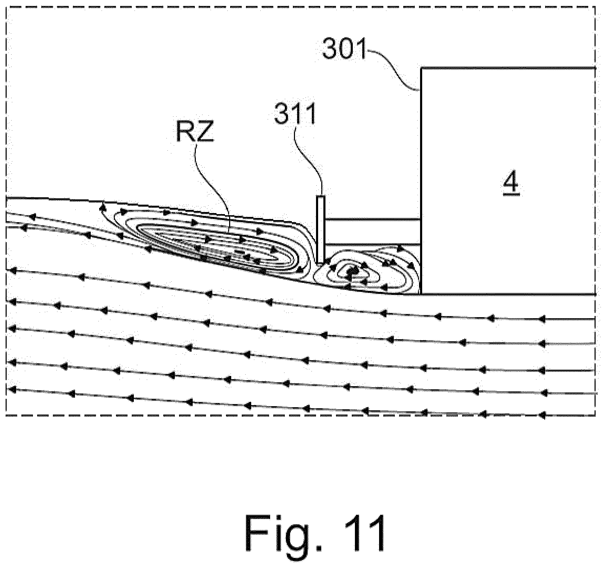

Reference is made to fig. 10 and fig. 11. Although a pushing device with a planar pushing surface may provide a reduction of the vessel hull resistance which is lower than a scoop shaped pushing device, as described above, a substantial vessel hull resistance reduction may still be obtained. Also, an advantage with a flat pushing device is that the flat shape makes it easy to manufacture.

Fig. 10 shows an embodiment where the pushing device 311 is planar and, as projected perpendicularly to the intended direction of straight travel of the vessel, presents a lower contour 317 which substantially matches with a lower contour of the transom 301. More specifically, the lower contour 317 of the pushing device 311 is V-shaped, similarly to the transom edge 303. In fig. 11, the recirculation zone RZ can be seen, in which water flows towards the pushing device 311 providing a forward directed force on the hull 4. Tests have shown a 4.5% reduction in the vessel hull resistance for a vessel with a flat pushing device 311 having a V-shaped lower contour 317 matching a V-shaped lower contour 303 of the transom 301. Most likely the hull resistance reduction may be even lower at low Froude numbers.

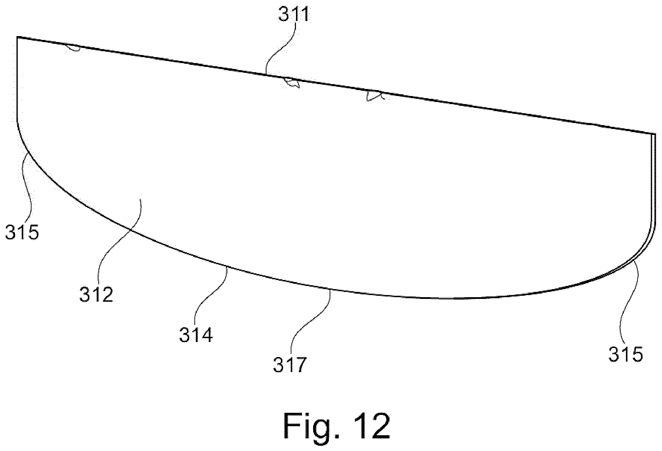

Fig. 12 shows a pushing device similar to the one shown in fig. 10, but differing therefrom in that the lower contour 317 thereof is continuous and rounded.

However, similarly to the embodiment in fig. 10, a middle section 314 of the lower contour 317 of the pushing device 311 is lower than two opposite transverse end sections 315 of the lower contour 317 of the pushing device 311.

It is understood that within the scope of the claims, it is also conceivable to provide a vessel with pushing device 311 having a pushing surface 312 with a convex shape. As explained, at least a portion of the pushing surface faces at least partly backwards in relation to the intended direction of straight travel of the vessel, and a convexly shaped pushing surface would thus face at least partly backwards. It is also possible to provide a vessel with an additional pushing device located behind a pushing device 311 according to any embodiment described or claimed herein. The additional pushing device may have a pushing surface with a shape that is the same as that of the pushing surface 312 of the pushing device 311 which is closer to the transom 301, or different therefrom.

Reference is made to fig. 13 and fig. 14 showing further examples of vessel sterns 3 at which a pushing device 311 according to any embodiment of the invention may be mounted. In fig. 13, a protruding stern portion 321 is provided above the transom 301, behind which a pushing device 311 is fixed. In fig. 14, the transom 301 is offset rearwards in relation to an upper stern portion 322.

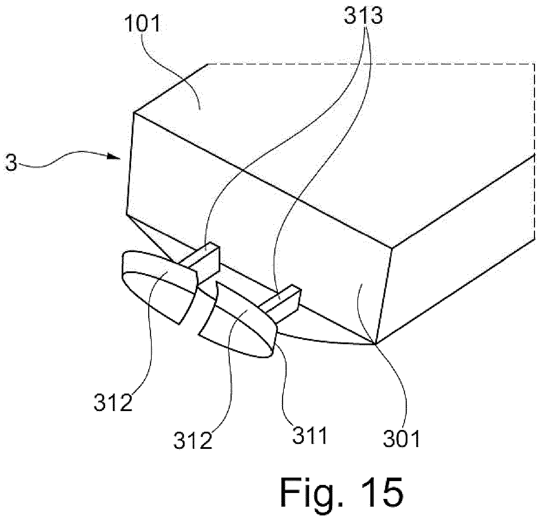

Reference is made to fig. 15, showing an embodiment in which the pushing device 311 is divided into two separated parts. Hence the pushing surface 312 is divided into two separated portions. The two portions of the pushing surface 311 are distributed along a horizontal and transverse direction of the vessel. The two portions of the pushing surface 311 are provided at a distance from each other. Between the two pushing device parts there is an opening. This opening may allow the discharged jet of a water jet propulsion unit (not shown) to pass the pushing device 311 without interfering with the pushing device. Embodiment in which the pushing device 311 is divided into a plurality of separated parts is useful for multi-hull vessels, such as catamarans or trimarans. Thereby each of the pushing device part is suitably positioned behind a respective of the hulls of the multi-hull vessel. In some embodiments, the pushing device parts may be connected, preferably above the water to air boundary, i.e. above the water surface, e.g. by a suitable connection bar.

It is understood that a vessel 1 according to any embodiment described or claimed herein may be used such that the propulsion arrangement 6, 7 of the vessel is controlled so as for the vessel to travel in the recirculating zone speed interval so that water is moving towards the transom 301 in a recirculating zone behind the transom, and allowing the pushing surface 311 to be at least partly submerged into the recirculating zone RZ.

**Claims**

1. A water surface vessel extending in a longitudinal direction parallel to an intended direction of straight travel, the vessel presenting a transom (301), wherein the vessel presents a mass, a hull shape, and hull dimensions adapted to, and a propulsion arrangement controllable for, travel at a recirculating zone speed at which water is moving towards the transom (301) in a recirculating zone (RZ) behind the transom (301), wherein the recirculating zone speed is in a recirculating zone speed interval in which the Froude number is in a range of 0.3-0.6, wherein the vessel comprises a pushing device (311) presenting a pushing surface (312) located in relation to the intended direction of straight travel of the vessel behind the transom (301), at least a portion of the pushing surface (312) facing at least partly backwards in relation to the intended direction of straight travel of the vessel, wherein the pushing surface (312) is located at a distance from the transom (301), which distance is at least 10% of the width of the transom (301) at a waterline (WL) of the vessel, whereby the pushing surface (312) is arranged to be at least partly submerged into the recirculating zone (RZ) when the vessel is travelling at the recirculation zone speed, so that the forward moving water in the recirculation zone acts on the pushing surface so as to provide a forwardly directed force transferred from the pushing device to the rest of the vessel, wherein the pushing device (311) is arranged to be outside of the water freestream at forward, straight travel of the vessel, on flat water, when the vessel is not heeling to port or to starboard, when the pushing surface (312) is at least partly submerged into the recirculating zone (RZ), and when the vessel is travelling at the recirculation zone speed, wherein the water freestream is formed by any portion of the water surrounding the vessel, having substantially the same speed in relation to the vessel as water further away from the vessel, **characterized in that** the pushing surface (312) presents a curvature with at least one center of curvature (CC) located on a side of the pushing surface (312) which is opposite to the transom (301), wherein the pushing surface (312) is curved in a horizontal plane intersecting the pushing device (311).

2. A water surface vessel according to claim 1, wherein the pushing surface (312) is concave.

3. A water surface vessel according to any one of claims 1-2, wherein the pushing surface (312) is scoop shaped.

4. A water surface vessel according to any one of claims 1-3, wherein the pushing surface (312) presents a double curvature.

5. A water surface vessel according to any one of claims 1-4, wherein the pushing surface (312) is curved in a plane intersecting the pushing device (311), which plane is vertical and parallel to the intended direction of straight travel of the vessel.

6. A water surface vessel according to any one of the preceding claims, wherein at least a lower portion of the pushing device (311) presents a deflection surface (316) which faces partly downwards and partly forwards in relation to the intended direction of straight travel of the vessel.

7. A water surface vessel according to any one of the preceding claims, wherein the pushing device (311) is J-shaped in a plane intersecting the pushing device (311), which plane is vertical and parallel to the intended direction of straight travel of the vessel.

8. A water surface vessel according to any one of the preceding claims, wherein the pushing device (311) presents a forward facing surface (318) which faces at least partly forwards in relation to the intended direction of straight travel of the vessel, which forward facing surface is convex in a plane which is vertical and parallel to the intended direction of straight travel of the vessel.

9. A water surface vessel according to any one of the preceding claims, wherein the pushing surface (312) is continuous.

10. A water surface vessel according to any one of the preceding claims, wherein, the pushing surface (312) is located at a distance from the transom (301), which distance is at least 20% of the width of the transom (301) at a waterline (WL) of the vessel.

11. A water surface vessel according to any one of the preceding claims, wherein a middle section (314) of a lower delimitation (317) of the pushing device (311) is lower than two opposite transverse end sections (315) of the lower delimitation (317) of the pushing device (311).

12. A water surface vessel according to any one of the preceding claims, wherein the pushing device (311) is arranged to be outside of the water freestream at forward, straight travel of the vessel, on flat water.

13. A water surface vessel according to any one of the preceding claims, wherein the pushing surface (312) is separate from the transom (301).

14. Use of a water surface vessel extending in a longitudinal direction parallel to an intended direction of straight travel, the vessel presenting a transom (301), wherein the vessel comprises a pushing device (311) presenting a pushing surface (312) located in relation to the intended direction of straight travel of the vessel behind the transom (301), at least a portion of the pushing surface (312) facing at least partly backwards in relation to the intended direction of straight travel of the vessel, wherein a propulsion arrangement of the vessel is controlled so as for the vessel to travel in a recirculating zone speed in a recirculating zone speed interval, in which the Froude number is in a range of 0.3-0.6, so that water is moving towards the transom (301) in a recirculating zone (RZ) behind the transom (301), wherein the pushing surface (312) is located at a distance from the transom (301), which distance is at least 10% of the width of the transom (301) at a waterline (WL) of the vessel, whereby the pushing surface (312) is at least partly submerged into the recirculating zone (RZ) when the vessel is travelling in the recirculation zone speed interval, so that the forward moving water in the recirculation zone acts on the pushing surface so as to provide a forwardly directed force transferred from the pushing device to the rest of the vessel, wherein the pushing device (311) is outside of the water freestream at forward, straight travel of the vessel, on flat water, when the vessel is not heeling to port or to starboard, when the pushing surface (312) is at least partly submerged into the recirculating zone (RZ), and when the vessel is travelling at the recirculation zone speed, wherein the water freestream is formed by any portion of the water surrounding the vessel, having substantially the same speed in relation to the vessel as water further away from the vessel.

15. Use according to claim 14, wherein the pushing device is above a stream surface (TESS) originating at an edge (303) of the transom.

16. Use according to any one of claims 14-15, wherein the pushing device (311) divides the recirculating zone (RZ) into a forward part (RZf) and a rearward part (RZr).

**Patentansprüche**

1. Wasserflächenfahrzeug, welches sich in einer Längsrichtung parallel zu einer beabsichtigten Richtung einer Geradeausfahrt erstreckt, wobei das Fahrzeug einen Heckspiegel (301) aufweist, wobei das Fahrzeug eine Masse, eine Rumpfform und Rumpfabmessungen aufweist, welche geeignet sind, und eine Vortriebsanordnung aufweist, welche steuerbar/regelbar ist, um mit einer Rezirkulationszonengeschwindigkeit zu fahren, bei welcher Wasser sich in einer Rezirkulationszone (RZ) hinter dem Heckspiegel (301) in Richtung auf den Heckspiegel (301) zu bewegt, wobei die Rezirkulationszonengeschwindigkeit in einem Rezirkulationszonengeschwindigkeitsintervall ist, in welchem die Froude-Zahl im Bereich von 0,3-0,6 ist, wobei das Fahrzeug eine Schiebevorrichtung (311) umfasst, welche eine Schiebefläche (312) bereitstellt, welche bezüglich der beabsichtigten Richtung einer Geradeausfahrt des Fahrzeugs hinter dem Heckspiegel (301) angeordnet ist, wobei wenigstens ein Teil der Schiebefläche (312) wenigstens teilweise rückwärts bezüglich der beabsichtigten Richtung einer Geradeausfahrt des Fahrzeugs gerichtet ist, wobei die Schiebefläche (312) mit einem Abstand zu dem Heckspiegel (301) angeordnet ist, wobei der Abstand wenigstens 10% der Breite des Heckspiegel (301) an einer Wasserlinie (WL) des Fahrzeugs ist, wobei die Schiebefläche (312) dazu eingerichtet ist, wenigstens teilweise in die Rezirkulationszone (RZ) einzutauchen, wenn das Fahrzeug mit der Rezirkulationszonengeschwindigkeit fährt, so dass das sich nach vorne bewegende Wasser in der Rezirkulationszone auf die Schieberfläche einwirkt, um eine nach vorne gerichtete Kraft bereitzustellen, welche von der Schiebevorrichtung auf den Rest des Fahrzeugs übertragen wird, wobei die Schiebevorrichtung (311) dazu eingerichtet ist, bei Vorwärts-Geradeausfahrt des Fahrzeugs auf flachem Wasser außerhalb der Wasseranströmung zu liegen, wenn das Fahrzeug nicht nach Backbord oder Steuerbord krängt, wenn die Schiebefläche (312) wenigstens teilweise in die Rezirkulationszone (RZ) eingetaucht ist, und wenn das Fahrzeug mit der Rezirkulationszonengeschwindigkeit fährt, wobei die Wasseranströmung durch jeden Teil des das Fahrzeug umgebenden Wassers gebildet ist, welcher im Wesentlichen die gleiche Geschwindigkeit bezüglich des Fahrzeugs hat, wie von dem Fahrzeug weiter entferntes Wasser, **dadurch gekennzeichnet, dass** die Schiebefläche (312) eine Krümmung mit wenigstens einem Krümmungszentrum (CC) aufweist, das an einer von dem Heckspiegel (301) abgewandten Seite der Schiebefläche (312) positioniert ist, wobei die Schiebefläche (312) in einer die Schiebevorrichtung (311) schneidenden horizontalen Ebene gekrümmt ist.

2. Wasserflächenfahrzeug nach Anspruch 1, wobei die Schiebefläche (312) konkav ist.

3. Wasserflächenfahrzeug nach einem der Ansprüche 1-2, wobei die Schiebefläche (312) schaufelförmig ist.

4. Wasserflächenfahrzeug nach einem der Ansprüche 1-3, wobei die Schiebefläche (312) eine doppelte Krümmung aufweist.

5. Wasserflächenfahrzeug nach einem der Ansprüche 1-4, wobei die Schiebefläche (312) in einer die Schiebevorrichtung (311) schneidenden Ebene gekrümmt ist, welche Ebene vertikal und parallel zu der beabsichtigten Richtung einer Geradeausfahrt des Fahrzeugs ist.

6. Wasserflächenfahrzeug nach einem der vorangehenden Ansprüche, wobei wenigstens ein unterer Teil der Schiebevorrichtung (311) eine Ablenkfläche (316) aufweist, welche teilweise nach unten und teilweise nach vorne bezüglich der beabsichtigten Richtung einer Geradeausfahrt des Fahrzeugs weist.

7. Wasserflächenfahrzeug nach einem der vorangehenden Ansprüche, wobei die Schiebevorrichtung (311) in einer die Schiebevorrichtung (311) schneidenden Ebene J-förmig ist, welche Ebene vertikal und parallel zu der beabsichtigten Richtung einer Geradeausfahrt des Fahrzeugs ist.

8. Wasserflächenfahrzeug nach einem der vorangehenden Ansprüche, wobei die Schiebevorrichtung (311) eine nach vorne weisende Fläche (318) aufweist, welche wenigstens teilweise nach vorne bezüglich der beabsichtigten Richtung einer Geradeausfahrt des Fahrzeugs weist, welche nach vorne weisende Fläche in einer Ebene, welche vertikal und parallel zu der beabsichtigten Richtung einer Geradeausfahrt des Fahrzeugs ist, konvex ist.

9. Wasserflächenfahrzeugen einem der vorangehenden Ansprüche, wobei die Schiebefläche (312) kontinuierlich ist.

10. Wasserflächenfahrzeug nach einem der vorangehenden Ansprüche, wobei die Schiebefläche (312) mit einem Abstand zu dem Heckspiegel (301) angeordnet ist, welcher Abstand wenigstens 20% der Breite des Heckspiegel an einer Wasserlinie (WL) des Fahrzeugs ist.

11. Wasserflächenfahrzeug nach einem der vorangehenden Ansprüche, wobei ein mittlerer Abschnitt (314) einer unteren Begrenzung (317) der Schiebevorrichtung (311) tiefer liegt als zwei entgegengesetzte Quer-Endabschnitte (315) der unteren Begrenzung (317) der Schiebevorrichtung (311).

12. Wasserflächenfahrzeug einem der vorangehenden Ansprüche, wobei die Schiebevorrichtung (311) dazu eingerichtet ist, bei Vorwärts-Geradeausfahrt des Fahrzeugs auf flachem Wasser außerhalb der Wasseranströmung zu sein.

13. Wasserflächenfahrzeug nach einem der vorangehenden Ansprüche, wobei die Schiebefläche (312) von dem Heckspiegel (301) separat ausgebildet ist.

14. Verwendung eines Wasserflächenfahrzeugs, welche sich in einer Längsrichtung parallel zu einer beabsichtigten Richtung einer Geradeausfahrt erstreckt, wobei das Fahrzeug einen Heckspiegel (301) aufweist, wobei das Fahrzeug eine Schiebevorrichtung (311) aufweist, welche eine bezüglich der beabsichtigten Richtung einer Geradeausfahrt des Fahrzeugs hinter dem Heckspiegel (301) angeordnete Schiebefläche (312) bereitstellt, wobei wenigstens ein Teil der Schiebefläche (312) wenigstens teilweise rückwärts bezüglich der beabsichtigten Richtung einer Geradeausfahrt des Fahrzeugs weist, wobei eine Vortriebsanordnung des Fahrzeugs derart gesteuert/geregelt wird, dass das Fahrzeug sich mit einer Rezirkulationszonengeschwindigkeit in einem Rezirkulationszonengeschwindigkeitsintervall bewegt, in welchem die Froude- Zahl im Bereich von 0,3-0,6 ist, so dass Wasser sich in einer Rezirkulationszone (RZ) hinter dem Heckspiegel (301) auf den Heckspiegel (301) zu bewegt, wobei die Schiebefläche mit einem Abstand zu dem Heckspiegel (301) angeordnet ist, welcher Abstand wenigstens 10% der Breite des Heckspiegels (301) an einer Wasserlinie (WL) des Fahrzeugs ist, wobei die Schiebevorrichtung (312) wenigstens teilweise in die Rezirkulationszone (RZ) eingetaucht ist, wenn das Fahrzeug mit der Rezirkulationszonengeschwindigkeit fährt, so dass das sich nach vorne bewegende Wasser in der Rezirkulationszone auf die Schiebefläche einwirkt, um eine nach vorne gerichtete Kraft bereitzustellen, welche von der Schiebevorrichtung auf den Rest des Fahrzeugs übertragen wird, wobei die Schiebevorrichtung (311) bei Vorwärts-Geradeausfahrt des Fahrzeugs auf flachem Wasser außerhalb der Wasseranströmung ist, wenn das Fahrzeug nicht nach Backbord oder Steuerbord krängt, wenn die Schiebefläche (312) wenigstens teilweise in die Rezirkulationszone (RZ) eingetaucht ist, und wenn das Fahrzeug mit der Rezirkulationszonengeschwindigkeit fährt, wobei die Wasseranströmung durch jeden Teil des das Fahrzeug umgebenden Wassers gebildet ist, welcher im Wesentlichen die gleiche Geschwindigkeit bezüglich des Fahrzeugs hat, wie von dem Fahrzeug weiter entferntes Wasser.

15. Verwendung nach Anspruch 14, wobei die Schiebevorrichtung über einer von einem Rand des Heckspiegels ausgehenden Strömungsfläche (TESS) ist.

16. Verwendung nach einem der Ansprüche 14-15, wobei die Schiebevorrichtung (311) die Rezirkulationszone (RZ) in einen vorderen Teil (RZf) und einen hinteren Teil (RZr) unterteilt.

## Revendications

1. Navire de surface d'eau s'étendant dans une direction longitudinale parallèle à une direction de déplacement rectiligne prévue, le navire présentant un tableau (301), dans lequel le navire présente une masse, une forme de coque, et des dimensions de coque adaptées à, et un agencement de propulsion commandable pour, un déplacement à une vitesse de zone de recirculation à laquelle l'eau se déplace vers le tableau (301) dans une zone de recirculation (RZ) derrière le tableau (301), dans lequel la vitesse de zone de recirculation est dans un intervalle de vitesses de zone de recirculation dans lequel le nombre de Froude est dans une plage de 0,3 à 0,6 ; dans lequel le vaisseau comprend un dispositif de poussée (311) présentant une surface de poussée (312) située par rapport à la direction de déplacement rectiligne prévue du vaisseau derrière le tableau (301), au moins une portion de la surface de poussée (312) faisant face au moins partiellement vers l'arrière par rapport à la direction de déplacement rectiligne prévue du navire, dans lequel la surface de poussée (312) est située à une distance du tableau (301), laquelle distance représente au moins 10 % de la largeur du tableau (301) au niveau d'une ligne de flottaison (WL) du navire, moyennant quoi la surface de poussée (312) est agencée pour être au moins partiellement immergée dans la zone de recirculation (RZ) lorsque le navire se déplace à la vitesse de zone de recirculation, de sorte que l'eau se déplaçant vers l'avant dans la zone de recirculation agit sur la surface de poussée de manière à conférer une force dirigée vers l'avant transférée du dispositif de poussée au reste du navire, dans lequel le dispositif de poussée (311) est agencé pour être à l'extérieur de l'écoulement libre d'eau au déplacement rectiligne vers l'avant du navire, sur une eau calme, lorsque le navire ne gîte pas sur bâbord ou sur tribord, lorsque la surface de poussée (312) est au moins partiellement immergée dans la zone de recirculation (RZ), et lorsque le navire se déplace à la vitesse de zone de recirculation, dans lequel l'écoulement libre d'eau est formé par une portion quelconque de l'eau entourant le navire, ayant sensiblement la même vitesse par rapport au navire que l'eau plus éloignée du navire, **caractérisé en ce que** la surface de poussée (312) présente une courbure avec au moins un centre de courbure (CC) situé sur un côté de la surface de poussée (312) qui est opposé au tableau (301), dans lequel la surface de poussée (312) est incurvée dans un plan horizontal coupant le dispositif de poussée (311).

2. Navire de surface d'eau selon la revendication 1, dans lequel la surface de poussée (312) est concave.

3. Navire de surface d'eau selon l'une quelconque des revendications 1 et 2, dans lequel la surface de poussée (312) est en forme de godet.

**4.** Navire de surface d'eau selon l'une quelconque des revendications 1 à 3, dans lequel la surface de poussée (312) présente une double courbure.

**5.** Navire de surface d'eau selon l'une quelconque des revendications 1 à 4, dans lequel la surface de poussée (312) est incurvée dans un plan coupant le dispositif de poussée (311), lequel plan est vertical et parallèle à la direction prévue de déplacement rectiligne du navire.

**6.** Navire de surface d'eau selon l'une quelconque des revendications précédentes, dans lequel au moins une portion inférieure du dispositif de poussée (311) présente une surface de déviation (316) qui est tournée partiellement vers le bas et partiellement vers l'avant par rapport à la direction prévue de déplacement rectiligne du navire.

**7.** Navire de surface d'eau selon l'une quelconque des revendications précédentes, dans lequel le dispositif de poussée (311) est en forme de J dans un plan coupant le dispositif de poussée (311), lequel plan est vertical et parallèle à la direction prévue de déplacement rectiligne du navire.

**8.** Navire de surface d'eau selon l'une quelconque des revendications précédentes, dans lequel le dispositif de poussée (311) présente une surface tournée vers l'avant (318) qui est tournée au moins partiellement vers l'avant par rapport à la direction prévue de déplacement rectiligne du navire, laquelle surface tournée vers l'avant est convexe dans un plan qui est vertical et parallèle à la direction prévue de déplacement rectiligne du navire.

**9.** Navire de surface d'eau selon l'une quelconque des revendications précédentes, dans lequel la surface de poussée (312) est continue.

**10.** Navire de surface d'eau selon l'une quelconque des revendications précédentes, dans lequel la surface de poussée (312) est située à une distance du tableau (301), laquelle distance représente au moins 20 % de la largeur du tableau (301) au niveau d'une ligne de flottaison (WL) du navire.

**11.** Navire de surface d'eau selon l'une quelconque des revendications précédentes, dans lequel une section médiane (314) d'une délimitation inférieure (317) du dispositif de poussée (311) est plus basse que deux sections d'extrémité transversales opposées (315) de la délimitation inférieure (317) du dispositif de poussée (311).

**12.** Navire de surface d'eau selon l'une quelconque des revendications précédentes, dans lequel le dispositif de poussée (311) est agencé pour être à l'extérieur de l'écoulement libre d'eau lors du déplacement rectiligne vers l'avant du navire, sur une eau calme.

**13.** Navire de surface d'eau selon l'une quelconque des revendications précédentes, dans lequel la surface de poussée (312) est séparée du tableau (301).

**14.** Utilisation d'un navire de surface d'eau s'étendant dans une direction longitudinale parallèle à une direction prévue de déplacement rectiligne, le navire présentant un tableau (301), dans laquelle le vaisseau comprend un dispositif de poussée (311) présentant une surface de poussée (312) située par rapport à la direction de déplacement rectiligne prévue du vaisseau derrière le tableau (301), au moins une portion de la surface de poussée (312) étant au moins partiellement tournée vers l'arrière par rapport à la direction de déplacement rectiligne prévue du navire, dans laquelle un agencement de propulsion du navire est commandé de manière à ce que le navire se déplace dans une vitesse de zone de recirculation dans un intervalle de vitesses de zone de recirculation, dans lequel le nombre de Froude est dans une plage **de 0,3** à 0,6 ; afin que l'eau se déplace vers le tableau (301) dans une zone de recirculation (RZ) derrière le tableau (301), dans laquelle la surface de poussée (312) est située à une distance du tableau (301), laquelle distance représente au moins 10 % de la largeur du tableau (301) au niveau d'une ligne de flottaison (WL) du navire, moyennant quoi la surface de poussée (312) est au moins partiellement immergée dans la zone de recirculation (RZ) lorsque le navire se déplace dans l'intervalle de vitesses de zone de recirculation, de sorte que l'eau se déplaçant vers l'avant dans la zone de recirculation agit sur la surface de poussée de manière à conférer une force dirigée vers l'avant transférée du dispositif de poussée au reste du navire, dans laquelle le dispositif de poussée (311) est à l'extérieur de l'écoulement libre d'eau au déplacement rectiligne vers l'avant du navire, sur une eau calme, lorsque le navire ne gîte pas sur bâbord ou sur tribord, lorsque la surface de poussée (312) est au moins partiellement immergée dans la zone de recirculation (RZ), et lorsque le navire se déplace à la vitesse de zone de recirculation, dans laquelle l'écoulement libre d'eau est formé par une portion quelconque de l'eau entourant le navire, ayant sensiblement la même vitesse par rapport au navire que l'eau plus éloignée du navire.

**15.** Utilisation selon la revendication 14, dans laquelle le dispositif de poussée se trouve au-dessus d'une surface de cours d'eau (TESS) partant d'un bord (303) du tableau.

**16.** Utilisation selon l'une quelconque des revendications 14 à 15, dans laquelle le dispositif de poussée (311) divise la zone de recirculation (RZ) en une partie avant (RZf) et une partie arrière (RZr) .

Fig. 1

EP 3 519 289 B1

Fig. 2

EP 3 519 289 B1

Fig. 3

Fig. 4

EP 3 519 289 B1

Fig. 5

Fig. 6

EP 3 519 289 B1

C    312    311    301

Fig. 7

312
311

Fig. 8

EP 3 519 289 B1

Fig. 9

Fig. 10

EP 3 519 289 B1

Fig. 11

EP 3 519 289 B1

Fig. 12

EP 3 519 289 B1

3

4

321

311

301

Fig. 13

3

4

322

311

301

Fig. 14

Fig. 15

EP 3 519 289 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3936280 A1